# EUROPEAN PATENT APPLICATION

(11) **EP 1 935 845 A1**
(43) Date of publication of application: **25.06.2008**
(21) Application number: 06127010.4
(22) Date of filing: 22.12.2006
(51) Int. Cl.: C01B 3/12, C10G 2/00

(54) **Process for producing hydrocarbons from a hydrocarbonaceous feedstock**

(71) Applicant: SHELL INTERNATIONALE RESEARCH MAATSCHAPPIJ B.V., 2596 HR Den Haag (NL)
(72) Inventor: Rigby, Anthony Malcolm, 1031 CM Amsterdam (NL)
(74) Representative: Zeestraten, Albertus W. J.

(57) **Abstract**

A process for producing hydrocarbons from a hydrocarbonaceous feedstock comprising the following steps:
(a) partially oxidising the hydrocarbonaceous feedstock to obtain synthesis gas;
(b) supplying the synthesis gas to a hydrocarbon synthesis reactor wherein the synthesis gas is catalytically converted at elevated temperature and pressure into hydrocarbons;
(c) discharging a liquid hydrocarbon product stream and a gaseous stream comprising gaseous hydrocarbon products, water vapour and unconverted synthesis gas from the hydrocarbon synthesis reactor;
(d) subjecting at least part of the gaseous stream to a catalytic water-gas shift conversion to obtain a shifted gaseous stream; and
(e) supplying at least part of the shifted gaseous stream to a hydrocarbon synthesis reactor wherein the synthesis gas is catalytically converted at elevated temperature and pressure into hydrocarbons.

## Description

### Field of the invention

The present invention provides a process for producing hydrocarbons from a hydrocarbonaceous feedstock, in particular from a feedstock with a low atomic hydrogen-to-carbon ratio such as for example coal, tar sand derived bitumen, heavy crude oil residues, and biomass.

### Background of the invention

The Fischer-Tropsch process can be used for the conversion of hydrocarbonaceous feedstocks into liquid and/or solid hydrocarbons. The feedstock, for example natural gas, associated gas, coal-bed methane, heavy crude oil residues, coal or biomass, is converted in a first step into a mixture of hydrogen and carbon monoxide. This mixture is often referred to as synthesis gas or syngas. The synthesis gas is then, in a second step, converted at elevated temperature and pressure over a suitable catalyst in a hydrocarbon synthesis reactor into paraffinic compounds ranging from methane to high molecular weight molecules comprising up to 200 carbon atoms, or, under particular circumstances, even more. Examples of the Fischer-Tropsch process are described in e.g. WO 02/02489, WO 01/76736, WO 02/07882, EP 510771 and EP 450861.

The synthesis gas that is produced from the hydrocarbonaceous feedstock in the first step often has a molecular hydrogen-to-carbon monoxide ratio (H₂/CO ratio) that is too low for optimum operation of the hydrocarbon synthesis reactor. This is particularly the case for a hydrocarbonaceous feedstock with a relatively low atomic hydrogen-to-carbon ratio such as for example coal, heavy crude oil residue, tar sand derived bitumen and, to a lesser extent, biomass. Synthesis gas obtained by gasification of coal, for example, typically has a H₂/CO ratio of less than 1, whereas the Fischer-Tropsch processes based on a non-shifting catalyst such as a cobalt-catalyst generally desire a H₂/CO ratio in the synthesis gas fed to the hydrocarbon synthesis reactor in the range of from 1.5 to 2.0.

In W02006/070018 is disclosed a process for producing hydrocarbons from coal or other solid carbonaceous fuels, wherein synthesis gas is prepared from the solid carbonaceous fuel in a first step, the synthesis gas is divided into at least two sub-streams, one of which undergoes a catalytic water-gas shift conversion reaction, and the so-obtained converted sub-stream is combined with a non-converted sub-stream to form synthesis gas stream with an increased H₂/CO ratio. The synthesis gas stream with the increased H₂/CO ratio is then fed into a hydrocarbon synthesis reactor for conversion into hydrocarbons.

### Summary of the invention

It has now been found that the H₂/CO ratio of synthesis gas that is supplied to a hydrocarbon synthesis reactor can be increased by subjecting at least part of the gaseous effluent stream from a hydrocarbon synthesis reactor to water-gas shift conversion and supplying the shifted gaseous effluent stream to the hydrocarbon synthesis reaction, preferably as a recycle to the same hydrocarbon synthesis reactor as wherein the gaseous effluent is produced or to a second hydrocarbon synthesis reactor.

Accordingly, the present invention provides a process for producing hydrocarbons from a hydrocarbonaceous feedstock comprising the following steps:
(a) partially oxidising the hydrocarbonaceous feedstock to obtain synthesis gas;
(b) supplying the synthesis gas to a hydrocarbon synthesis reactor wherein the synthesis gas is catalytically converted at elevated temperature and pressure into hydrocarbons;
(c) discharging a liquid hydrocarbon product stream and a gaseous stream comprising gaseous hydrocarbon products, water vapour and unconverted synthesis gas from the hydrocarbon synthesis reactor;
(d) subjecting at least part of the gaseous stream to a catalytic water-gas shift conversion to obtain a shifted gaseous stream; and
(e) supplying at least part of the shifted gaseous stream to a hydrocarbon synthesis reactor wherein the synthesis gas is catalytically converted at elevated temperature and pressure into hydrocarbons.

Thus, the present invention provides supply of a synthesis gas with a H₂/CO ratio more suitable for efficient hydrocarbon synthesis to a hydrocarbon synthesis reactor, in a process for producing hydrocarbons from a hydrocarbonaceous feedstock, in particular from a hydrocarbonaceous feedstock with a relatively low atomic hydrogen-to-carbon ratio. The process according to the invention allows for the increase of the H₂/CO ratio in the synthesis gas supplied to a hydrocarbon synthesis reactor to a ratio which is known to provide more satisfactory results during the synthesis step, especially higher quality and higher selectivity of the hydroconversion synthesis.

A further advantage of the process according to the invention is that the process is able to accommodate variations in the H₂/CO ratio of synthesis gas formed from different qualities of hydrocarbonaceous feedstocks.

A further advantage is that steam produced in the hydrocarbon synthesis reactor is used in the water-gas shift conversion step. Thus, steam in the gaseous effluent of a hydrocarbon synthesis reactor does not need to be removed by for example a condensation step. This also means that no or less steam has to be generated externally for the water-gas shift conversion and thus represents an important energy saving.

It might be desirable to remove water, for example by condensation, from the shifted gaseous stream before it is supplied to a hydrocarbon synthesis reactor. The amount of water to be removed will, however, be far lower than the amount that would have to be removed without water-gas shift conversion of the gaseous effluent stream. Moreover, this water contains far less impurities than water that would have to be removed from the shifted synthesis gas sub-stream in the process of W02006/070018, wherein part of the synthesis gas produced in a synthesis gas preparation step is subjected to water-gas shift conversion before it is supplied to a hydrocarbon synthesis reactor. Thus, less treating of the condensed water stream is needed.

For synthesis gas with very low H₂/CO ratios, for example below 0.5, it might still be desirable to subject part of the synthesis gas to water-gas shift conversion before it is supplied to the hydrocarbon synthesis reactor, for example according to W02006/070018, in addition to water-gas shift conversion of the gaseous recycle stream. The upstream water-gas shift converter can then be much smaller than without water-gas shift conversion of the gaseous recycle stream.

### Brief description of the drawing

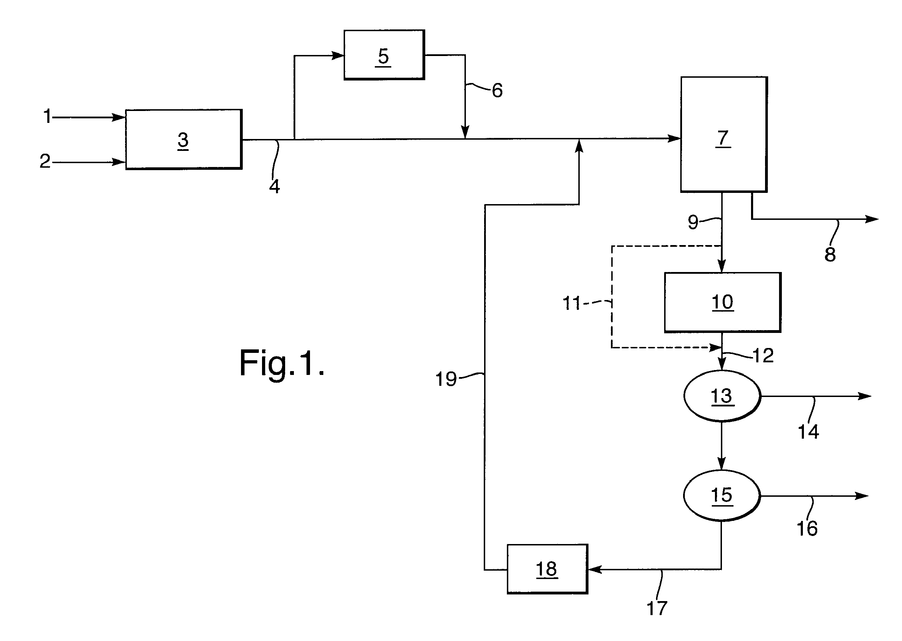

Figure 1 schematically shows a flow diagram of the process according to the invention.

### Detailed description of the invention

In the process according to the invention, a hydrocarbonaceous feedstock is first partially oxidised in step (a) to obtain synthesis gas. Processes for partially oxidising a hydrocarbonaceous feedstock are known in the art and include non-catalytic and catalytic partial oxidation or autothermal reforming processes. Step (a) can take place according to various established partial oxidation processes. These processes include the Shell Gasification Process, a non-catalytic partial oxidation process for a gaseous feedstock. A comprehensive survey of this process can be found in the Oil and Gas Journal, September 6, 1971, pp 86-90. A detailed overview of various partial oxidation processes is given in "Gasification" by Chris Higman and Maarten van den Burgt, Elsevier, Amsterdam etc., 2003, in particular chapter 5, pages 85-170.

Reference herein to a hydrocarbonaceous feedstock is to an organic feedstock containing carbon atoms and hydrogen atoms, optionally in combination with heteroatoms such as oxygen, sulphur or nitrogen. Such feedstocks include biomass, in particular lignocellulosic biomass, gaseous hydrocarbon streams such as natural gas, associated gas or coal-bed methane, carbonaceous feedstocks, i.e. a hydrocarbonaceous feedstock with a relatively low hydrogen atom content, such as coal, tarsand derived bitumen or heavy residues from crude oil.

As has been mentioned above, the process according to the invention is particularly suitable for a feedstock with a relatively low atomic hydrogen-to-carbon ratio, i.e. typically below 1.5, preferably below 1.0. Examples of such feedstocks are biomass, coal, tar sand derived bitumen or a residual crude oil fraction. Coal is a particularly preferred feedstock.

In step (b) of the process according to the invention, synthesis gas obtained in partial oxidation step (a) is supplied to a hydrocarbon synthesis reactor wherein the synthesis gas is catalytically converted at elevated temperature and pressure into hydrocarbons.

The synthesis gas obtained in step (a) is typically treated to remove solids (in case of a solid feedstock such as coal or biomass) and gaseous contaminants, for example H₂S, CO₂ and COS, before it is supplied to the hydrocarbon synthesis reactor in step (b). In case of synthesis gas with a very low H₂/CO ratio, for example below 0.5, it is desirable to subject at least part of the synthesis gas obtained in step (a) to water-gas shift conversion before it is supplied to the hydrocarbon synthesis reactor in step (b). This may for example be done as disclosed in WO2006/070018.

The conversion of synthesis gas into hydrocarbons is known in the art and often referred to as the Fischer-Tropsch reaction. Catalysts and process conditions for the Fischer-Tropsch reaction are well-known in the art. Typically, the catalytic conversion may be effected at a temperature in the range of from 100 to 600 °C, preferably of from 150 to 350 °C, more preferably of from 180 to 270 °C. Typical total reactor pressures for catalytic conversion step (b) are in the range of from 1 to 200 bar (absolute), more preferably from 10 to 100 bar (absolute), even more preferable from 20 to 70 bar (absolute).

Catalysts used in step (b) of the process are known in the art and are usually referred to as Fischer-Tropsch catalysts. Catalysts for use in the Fischer-Tropsch hydrocarbon synthesis frequently comprise, as the catalytically active component, a metal from Group VIII of the previous IUPAC version of the Periodic Table of Elements such as that described in the 68th Edition of the Handbook of Chemistry and Physics (CPC Press). Typical catalytically active metals include ruthenium, iron, cobalt and nickel. Since cobalt-based Fischer-Tropsch catalysts have minimal water-gas shift activity, the process according to the invention is particularly suitable for a hydrocarbon synthesis step (b) using cobalt as the catalytically active metal. Therefore, cobalt is a preferred catalytically active metal.

In step (b), the synthesis gas is converted into normally gaseous, normally liquid and optionally some normally solid hydrocarbons. In step (c), a liquid stream comprising hydrocarbon product and a gaseous stream comprising gaseous hydrocarbon products, water vapour, unconverted synthesis gas, and optionally inert components such as nitrogen are discharged from the hydrocarbon synthesis reactor. Reference herein to gaseous hydrocarbon products in the gaseous stream is to hydrocarbon products that are gaseous at the conditions of temperature and pressure prevailing in the hydrocarbon synthesis reactor, i.e. at the elevated temperature and pressure as defined hereinabove.

The liquid stream comprises liquid and optionally solid hydrocarbons that are produced in step (b). The hydrocarbons in the liquid stream typically are hydrocarbons with 5 to 100 carbon atoms, although hydrocarbons with up to 200 carbon atoms may be present. The hydrocarbons usually are paraffinic of nature, while up to 30 wt%, preferably up to 15 wt%, of either olefins or oxygenated compounds may be present. A part of the hydrocarbons in the liquid stream may boil above the boiling point range of the so-called middle distillates. The higher boiling range paraffinic hydrocarbons, if present, may be isolated and subjected to a catalytic hydrocracking and/or hydro-isomerisation step, which is known per se in the art, to yield the desired middle distillates.

In step (d), at least part of the gaseous stream is subjected to a catalytic water-gas shift conversion. In the well-known water-gas shift reaction, carbon monoxide is reacted with water vapour to obtain carbon dioxide and hydrogen according to the following equation:

CO + H₂O ⇔ CO₂ + H₂

The water-gas shift conversion reaction thus provides a shifted gaseous stream that is enriched in hydrogen. Since water is produced in hydrocarbon synthesis step (b), the gaseous stream that is discharged from the hydrocarbon synthesis reactor contains water vapour. The water-gas shift conversion may therefore be carried out with no or minimal addition of externally generated steam to the gaseous stream. Preferably, step (d) is carried out without adding steam to the gaseous stream that is discharged from the hydrocarbon synthesis reactor. The amount of water in the gaseous stream is typically sub-stoichiometric relative to the amount of carbon monoxide present. Therefore, if no externally generated steam is added, the shifted gaseous stream will typically obtain hydrogen and carbon monoxide.

The shifted, hydrogen-enriched gaseous stream obtained in step (d) preferably has a hydrogen-to-carbon monoxide ratio in the range of from 1.2 to 3.0, more preferably in the range of from 1.5 to 3.0.

The catalyst used in step (d) can be any of the known catalysts for a water-gas shift reaction, including iron, chromium, copper and zinc. Copper on zinc oxide is a known shift catalyst.

In step (e), at least part of the shifted gaseous stream is supplied to a hydrocarbon synthesis reactor, preferably to the reactor of step (b) as a recycle. Alternatively, at least part of the shifted gaseous stream is supplied to a second hydrocarbon synthesis reactor operating in series with the reactor of step (b). It is also possible to recycle part of the shifted stream to the reactor of step (b) and to supply part of the shifted stream to a second hydrocarbon synthesis reactor. Preferably, at least 50% of the shifted gaseous stream is recycled to the reactor of step (b), more preferably at least 70%, even more preferably at least 80%.

Part of the shifted gaseous stream may be used for hydrogen manufacture, for example by separating a hydrogen stream from it by pressure swing absorption. The hydrogen thus-produced may be used in other parts of the process, for example for hydrocracking the liquid hydrocarbons synthesised in step (b), or in other processes.

Prior to supplying the shifted gaseous stream to a hydrocarbon synthesis reactor, components other than carbon monoxide and hydrogen may be removed. Preferably, at least water is removed from the shifted gaseous stream, since water has an adverse effect on the activity of the hydrocarbon synthesis catalyst. Water may be removed by any suitable technique known in the art, typically by condensation.

In order to avoid the build-up of inert components in the hydrocarbon synthesis step, it is preferred to remove also carbon dioxide from the shifted gaseous stream. This may be done by techniques known in the art, for example by absorbing carbon dioxide with a liquid selective absorbent solvent. Chemical or physical solvents or mixtures thereof may be used. Preferably, an amine-comprising liquid absorbent solvent is used. Suitable amines for this purpose are known in the art and include mono-ethanolamine, di-ethanolamine, tri-ethanolamine, diisopropanolamine, and methyl-di-ethanolamine. Preferably, absorption with an amine is carried out at a temperature in the range of from 20 to 80 °C, preferably of from 30 to 60 °C. Alternatively, carbon dioxide may be removed by a physical solvent process based on methanol. An example of such process is known in the art as the Rectisol process. Physical solvent processes based on methanol are typically carried out at sub-zero temperatures.

The shifted gaseous stream discharged from the water-gas shift conversion zone typically has a temperature in the range of from 240 to 320 °C. The stream therefore needs to be cooled before the carbon dioxide can be removed by amine adsorption or a physical solvent process based on methanol. During cooling, hydrocarbons with more than three carbon atoms and water will typically be condensed and thus removed from the shifted gaseous stream.

Preferably, at least 80 volume% of the carbon dioxide present in the shifted gaseous stream is removed, more preferably at least 90 volume%, even more preferably at least 95 volume%.

In order to control the H₂/CO ratio in the gaseous stream that is recycled to the hydrocarbon synthesis reactor of step (b) or supplied to a second hydrocarbon synthesis reactor, it may be desired that part of the gaseous stream bypasses water-gas shift conversion step (d) and is combined with the shifted gaseous stream before is it supplied to a hydrocarbon synthesis reactor in step (e).

### Detailed description of the drawing

In Figure 1 is shown a process for producing hydrocarbons from coal. Coal 1 and oxygen 2 are supplied to coal gasifier 3 and therein partially oxidised to obtain synthesis gas. The synthesis gas is withdrawn from gasifier 3 via conduit 4, and treated to remove solids, H₂S and CO₂ (not shown). Part of the synthesis gas is supplied to water-gas shift conversion unit 5 to obtain shifted synthesis gas 6 that is combined with the non-shifted synthesis gas. The combined stream of synthesis gas is supplied to hydrocarbon synthesis reactor 7. In hydrocarbon synthesis reactor 7, synthesis gas is catalytically converted into hydrocarbons at elevated temperature and pressure. Liquid hydrocarbon product is discharged from reactor 7 via conduit 8. The liquid hydrocarbon product may be further processed (not shown), it may for example be subjected to hydrocracking and/or hydro-isomerisation to obtain the desired hydrocarbon products.

A gaseous stream comprising gaseous hydrocarbons, unconverted synthesis gas and water vapour is supplied via conduit 9 to water-gas shift conversion reactor 10. Part of the gaseous stream may by-pass water-gas shift conversion reactor 10 via conduit 11 if needed for control of the H₂/CO ratio in the recycle stream to hydrocarbon synthesis reactor 7.

A shifted gaseous stream is discharged from water-gas shift conversion reactor 10 via conduit 12. The shifted gaseous stream typically has a temperature in the range of from 240 to 300 °C. The shifted gaseous stream is cooled in condensor 13 to a temperature in the range of from 120 to 200 °C. Condensate hydrocarbons are withdrawn from condenser 13 via conduit 14. Cooled shifted gaseous stream is further cooled in air cooler 15 to a temperature in the range of from 40 to 95 °C. A liquid stream comprising further condensate hydrocarbons and water is withdrawn from air cooler 15 via conduit 16. Cooled shifted gaseous stream is supplied via conduit 17 to absorption tower 18. Carbon dioxide is removed in absorption tower 18 by absorbing it in an aqueous amine solution. The carbon dioxide depleted shifted gaseous stream is recycled via conduit 19 to hydrocarbon synthesis reactor 7. A part of the carbon dioxide depleted shifted gaseous stream may be recycled to a second hydrocarbon synthesis reactor (not shown).

## Claims

1. A process for producing hydrocarbons from a hydrocarbonaceous feedstock comprising the following steps:
(a) partially oxidising the hydrocarbonaceous feedstock to obtain synthesis gas;
(b) supplying the synthesis gas to a hydrocarbon synthesis reactor wherein the synthesis gas is catalytically converted at elevated temperature and pressure into hydrocarbons;
(c) discharging a liquid hydrocarbon product stream and a gaseous stream comprising gaseous hydrocarbon products, water vapour and unconverted synthesis gas from the hydrocarbon synthesis reactor;
(d) subjecting at least part of the gaseous stream to a catalytic water-gas shift conversion to obtain a shifted gaseous stream; and
(e) supplying at least part of the shifted gaseous stream to a hydrocarbon synthesis reactor wherein the synthesis gas is catalytically converted at elevated temperature and pressure into hydrocarbons.

2. A process according to claim 1, wherein the hydrocarbon synthesis reactor of step (e) is the hydrocarbon synthesis reactor of step (b).

3. A process according to claim 2, wherein at least 50% of the shifted gaseous stream is supplied to the hydrocarbon synthesis reactor of step (b), preferably at least 70%.

4. A process according to any one of the preceding claims, wherein at least part of the shifted gaseous stream is supplied to a second hydrocarbon synthesis reactor.

5. A process according to any one of the preceding claims, wherein water and optionally hydrocarbons with more than three carbon atoms are separated from the shifted gaseous stream prior to supplying the shifted gaseous stream to a hydrocarbon synthesis reactor in step (e).

6. A process according to any one of the preceding claims, wherein the synthesis gas is catalytically converted into hydrocarbons in step (b) using a cobalt-based Fischer-Tropsch catalyst.

7. A process according to any one of the preceding claims, wherein, in water-gas shift conversion step (d), no steam is added to the gaseous stream discharged from the hydrocarbon synthesis reactor.

8. A process according to any one of the preceding claims, wherein the hydrocarbonaceous feedstock is a hydrocarbonaceous feedstock with an atomic hydrogen-to-carbon ratio below 1.5, preferably below 1.0.

9. A process according to claim 8, wherein the hydrocarbonaceous feedstock is biomass, coal, tar sand derived bitumen or a residual crude oil fraction, preferably coal.

10. A process according to any one of the preceding claims, wherein carbon dioxide is removed from the shifted gaseous stream prior to supplying the shifted gaseous stream to a hydrocarbon synthesis reactor in step (e).

11. A process according to claim 10, wherein carbon dioxide is removed by means of a liquid selective absorbent, preferably a liquid selective absorbent comprising an amine.

12. A process according to any one of the preceding claims, wherein the shifted gaseous stream has a hydrogen-to-carbon monoxide ratio in the range of from 1.2 to 3.0.
